# EUROPEAN PATENT SPECIFICATION

(11) **EP 1 465 356 B1**
(45) Date of publication and mention of the grant of the patent: **14.11.2007**
(21) Application number: 04251188.1
(22) Date of filing: 02.03.2004
(51) Int. Cl.: H04B 7/005

(54) **Method of controlling the transmit power of a mobile communications device**
Verfahren zur Sendeleistungsregelung eines Mobilkommunikationsgerätes
Procédé de commande de la puissance de transmission d'un dispositif de communication mobile

(30) Priority: 04.04.2003 GB 0307872
(43) Date of publication of application: 06.10.2004
(73) Proprietor: Ubinetics Limited, Melbourn, Hertfordshire SG8 6DP (GB)
(72) Inventor: Goodwin, Stephen, Ely, Cambridgeshire CB26 2SR (GB)
(74) Representative: Pratt, David Martin

(56) References cited:
- WO-A-91/17606
- US-A- 5 548 616

## Description

This invention relates to a method of controlling the transmit power of a mobile communications device, and in particular to a method of controlling the transmit power of a 3G mobile phone handset.

The 3G specifications place a requirement on a mobile phone handset to control its transmit power to a defined accuracy, and this accuracy must increase as the power level reaches its maximum value. The actual 3G requirement is that the transmit power must be within ± 9dB of a nominal power level with a ± 20% linearity. In addition to this, the top 10dB of the transmit power must have an absolute reporting accuracy requirement of ± 4dB and an absolute reporting accuracy requirement of ± 2dB at the maximum power output.

The accuracy of the transmit chain of a mobile phone handset can be calibrated, below a set level, using a look-up table with some nominal calibration data. It has not, however, been possible to achieve accurate reporting of transmit power levels as these approach the maximum output.

WO 91/17606 describes a digital automatic gain control for a mobile communications device.

The aim of the invention is to provide a method of controlling the transmit power of a mobile phone handset to a defined accuracy.

The present invention provides a method of controlling the transmit power of a mobile communications device having a base band unit provided with a calibration unit, a power detector and a transmit antenna, the method being such that the power at the output of the power detector lies within 9dB of a desired power set by the calibration unit, the method comprising increasing the level of the power at the output of the power detector prior to the desired power reaching the power level 10dB less than the maximum output power, so that, when the desired power lies within the top 10dB of said range, the difference between the power at the output of the power detector and the power at the transmit antenna output is, at most, 4dB, and, at maximum power output, the difference between the power at the output of the power detector and the power at the transmit antenna output is, at most, 2dB.

The level of the power at the output of the power detector is increased by 0.2dB per 1dB increase in the power at the transmit antenna output.

Advantageously, the point from which the level of the power at the output of the power detector is increased is 25dB below the desired power level just below the maximum power output level.

The invention will now be described in greater detail, by way of example, with reference to the drawings, in which:-
Figure 1 is a schematic representation of a mobile communications device constructed in accordance with the invention, and an associated base station; and
Figure 2 is a graph illustrating the transmit power control method of the invention.

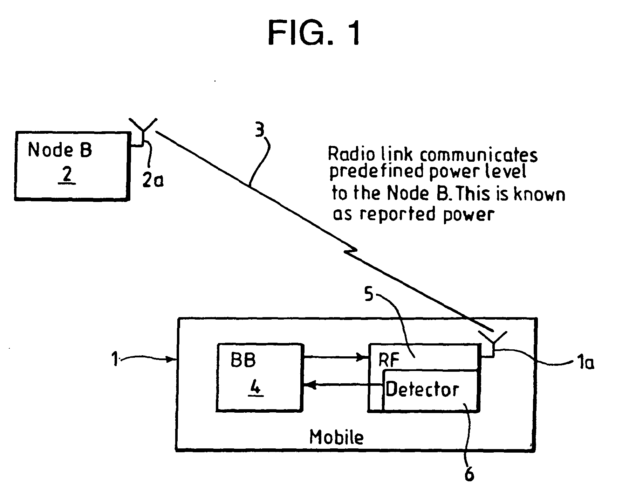

Referring to the drawings, Figure 1 shows a mobile communications device 1, a base station 2, and a radio link 3. The mobile communications device 1 includes a base band unit 4, an RF front end 5 and a power detector 6. The radio link 3 between the device 1 and the base station 2 is via respective antennas 1 a and 2a.

The transmit power level of the device 1 is set by a predefined calibration table in the base band unit 4. This may be up to 9dB in error with respect to the actual transmitted power due to tolerances in the hardware. Once the power detector 6 comes into its operational range (as is described below) the reported power from the device 1 to the base station 2 is adjusted at each uplink transmit slot, so that the reported power and the actual uplink power are within the tolerances defined in the 3G specifications over the top 10dB. The reported power level is transmitted from the device, to the base station 2 in a channel of the physical layer of the radio link 3. As described below, this adjustment is gradual, and never exceeds the 20% tolerance given for the power steps. It is implemented whether or not there is a request for a power change.

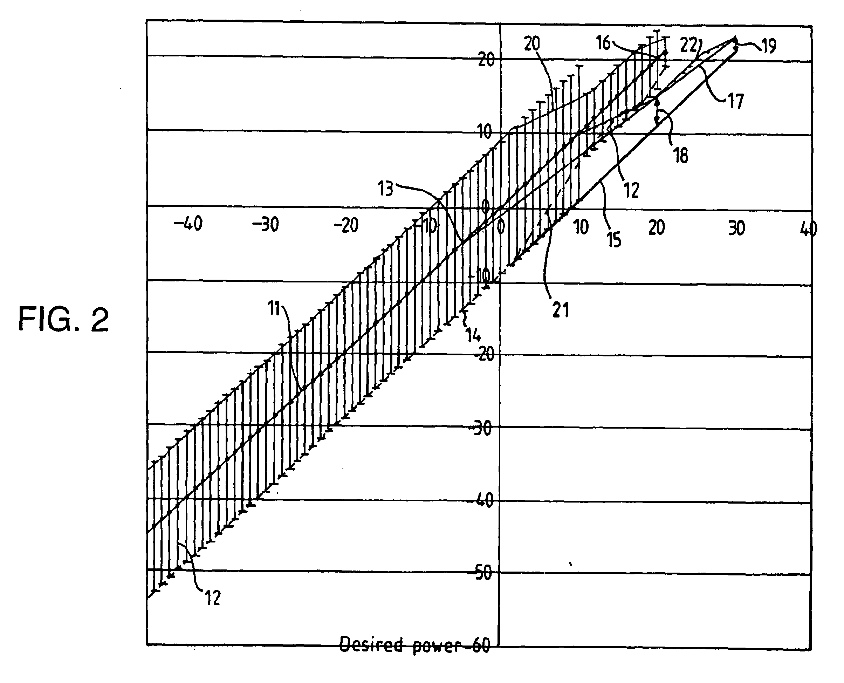

Figure 2 illustrates how the power detector 6 is used to control the transmit power of the device 1. This figure is a graph of actual power transmitted against desired power for a class 4 3G mobile phone handset whose operational power ranges from -50dBm to 21dBm. The graph shows the nominal (desired) power over the entire range, as indicated by the power line 11. The required accuracy at each 1dB spacing is shown by respective vertical bars 12. As shown, the handset 1 can be up to 9dB above or below the power line 11 until the nominal (desired) output power reaches 11dB, that is to say 10dB below its maximum of 21dBm. Between 11dBm and 21dBm, the bars 12 indicate a maximum difference between the power at the output of the power detector 6 and the power at the transmit antenna of 4 dB; and, at maximum power (21dBm), the maximum difference, as indicated by the appropriate bar 12, is 2dB.

The handset 1 operates in a conventional manner until the nominal (desired) output power reaches -5dBm, as indicated by the point 13. Consider now the worst case for transmit power of the handset 1, namely that its receiver is perfect, in which case the transmit power can be up to 9dB in error over what the handset believes it is transmitting. Thus, when the desired power level reaches -5dBm with a -9dB error present, the actual measured value is -14dBm, as indicated by the point 14 on the graph. The actual power transmitted by the device 1 is shown by the power line 15.

In order to comply with the 20% linearity requirements, the power detector 6 must start working well before the nominal (desired) power reaches the power level of 11dBm (that is to say 10dB below the maximum power level of 21 dBm). This point (the point 13) is calculated by considering the power level just below (say 1dB) the maximum power level of 21dBm. This point (point 16) must be such that the maximum difference of the power at the output of the power detector 6 and the power at the power at the transmit antenna is 4dB, that is to say a 5dB difference (9dB - 4dB) from that required at all power levels more than 10dB from the maximum. The 20% linearity requirement then means that the point 13 (at which the power detector 6 comes into operation) must be 25dB below this power level, that is to say -5dBm.

Once the power detector 6 comes into operation, each time power is reported at an uplink transmit slot, this power is adjusted by 20% of the tolerance given for the power steps. In other words, if the power detector 6 reports every 1dB, then the power at the output of the power detector 6 is increased by 0.2dB each time. The power at the output of the power detector 6 is indicated by the line 17, from which it will be noted that this power is always within 3G transmit power requirements. In particular, there is a 4dB difference (as indicated by the double-headed arrow 18) between the power line 17 and the power line 15 when the transmit power is 20dBm (i.e 1dB below maximum), and there is a 2dB difference (as indicated by the double-headed arrow 19) between the power lines 17 and 15 when the transmit power is at maximum power.

The line 20 indicates the maximum power permitted under the 3G specifications above the power line 11, and the line 21 indicates the minimum power permitted under the 3G specifications below the power line 11. However, as the actual power is 9dB below the nominal (desired) power, power line 22 indicates the maximum permitted power according to the 3G specifications above the power line 15, and it will be noted that each point on that line is displaced along the desired power axis by 9dB. It will also be noted that the power line 22 meets the power line 17 at the double-arrows 18 and 19, indicating that the 4dB and 2dB differences as required by the 3G specifications are met.

It will be apparent, therefore, that the method described above permits a mobile phone handset to control its transmit power within the accuracy required by the 3G specifications. It will also be apparent that, by correcting the reported power rather than the actual power, the method of the invention enables an open loop control system to be implemented for transmissions from a 3G phone handset.

## Claims

1. A method of controlling the transmit power of a mobile communications device (1) having a base band unit (4) provided with a calibration unit, a power detector (6) and a transmit antenna (1a), the method being such that the power at the output of the power detector lies within 9dB of a desired power set by the calibration unit, the method comprising increasing the level of the power at the output of the power detector prior to the desired power reaching the power level 10dB less than the maximum output power, so that, when the desired power lies within the top 10dB of said range, the difference between the power at the output of the power detector and the power at the transmit antenna output is, at most, 4dB, and, at maximum power output, the difference between the power at the output of the power detector and the power at the transmit antenna output is, at most, 2dB, **characterised in that** the level of the power at the output of the power detector is increased by 0.2dB per 1dB increase in the power at the transmit antenna output.

2. A method as claimed in claim 1, wherein the point from which the level of the power at the output of the power detector (6) is increased is 25dB below the desired power level just below the maximum power output level.

## Patentansprüche

1. Verfahren zum Steuern der Übertragungsenergie eines mobilen Kommunikationsgerätes (1) mit einer Basisbandeinheit (4), die mit einer Kalibrierungseinheit ausgestatteten ist, einem Energiedetektor (6) und einer Sendeantenne (1a), wobei das Verfahren so ist, dass die Energie am Ausgang des Energiedetektors innerhalb von 9dB der gewünschten Energie liegt, die von der Kalibrierungseinheit vorgegeben ist, wobei das Verfahren die Erhöhung des Energieniveaus am Ausgang des Energiedetektors umfasst, bevor die gewünschte Energie ein um 10dB geringeres Energieniveau als die Maximalausgangsenergie erreicht, so dass, wenn die erwünschte Energie innerhalb der oberen 10dB des genannten Bereichs liegt, die Differenz zwischen der Energie am Ausgang des Energiedetektors und der Energie am Sendeantennenausgang höchstens 4dB ist, und, bei maximalem Energieausgang, die Differenz zwischen der Energie am Ausgang des Energiedetektors und die Energie am Sendeantennenausgang höchstens 2dB ist, **dadurch gekennzeichnet, dass** das Energieniveau am Ausgang des Energiedetektors um 0,2dB pro 1dB Erhöhung der Energie an dem Sendeantennenausgang erhöht wird.

2. Verfahren nach Anspruch 1, bei dem der Punkt, von dem das Energieniveau am Ausgang des Energiedetektors (6) erhöht wird, 25dB unterhalb des gewünschten Energieniveaus, also gerade unterhalb des maximalen Ausgangsenergieniveaus ist.

## Revendications

1. Procédé de commande de la puissance de transmission d'un dispositif de communication mobile (1) ayant une unité de bande de base (4) prévue avec une unité d'étalonnage, un détecteur de puissance (6) et une antenne de transmission (1a), le procédé étant tel que la puissance de la sortie du détecteur de puissance se trouve dans les limites de 9 dB d'une puissance souhaitée, réglée par l'unité d'étalonnage, le procédé comprenant l'étape consistant à augmenter le niveau de la puissance au niveau de la sortie du détecteur de puissance avant que la puissance souhaitée n'atteigne le niveau de puissance inférieur de 10 dB à la puissance de sortie maximale, de sorte que, lorsque la puissance souhaitée se trouve dans les limites des 10 dB supérieurs de ladite plage, la différence entre la puissance au niveau de la sortie du détecteur de puissance et la puissance au niveau de la sortie d'antenne de transmission est, au maximum, de 4 dB, et au niveau de la sortie de puissance maximale, la différence entre la puissance au niveau de la sortie du détecteur de puissance et la puissance au niveau de la sortie d'antenne de transmission est, au maximum, de 2 dB, **caractérisé en ce que** le niveau de la puissance au niveau de la sortie du détecteur de puissance est augmenté de 0,2 dB par augmentation de 1 dB de la puissance au niveau de la sortie d'antenne de transmission.

2. Procédé selon la revendication 1, dans lequel le point à partir duquel le niveau de la puissance au niveau de la sortie du détecteur de puissance (6) est augmenté est de 25 dB au-dessous du niveau de puissance souhaitée, juste au-dessous du niveau de sortie de puissance maximale.
